# EUROPÄISCHE PATENTSCHRIFT

(11) **EP 3 929 033 B1**
(45) Veröffentlichungstag und Bekanntmachung des Hinweises auf die Patenterteilung: **23.08.2023**
(21) Anmeldenummer: 20182043.8
(22) Anmeldetag: 24.06.2020
(51) Int. Cl.: B60P 7/08, A44B 11/25

(54) **LADUNGSSICHERUNGSNETZ UND NOTÖFFNUNGSVORRICHTUNG DAFÜR**
CHARGE PROTECTION NETWORK AND EMERGENCY RELEASE DEVICE FOR SAME
RÉSEAU DE SÉCURISATION DE CHARGE ET DISPOSITIF D'OUVERTURE D'URGENCE ASSOCIÉ

(43) Veröffentlichungstag der Anmeldung: 29.12.2021
(73) Patentinhaber: WISTRA GmbH Cargo Control, 23923 Selmsdorf (DE)
(72) Erfinder: Birenheide, Christian, 23919 Berkenthin (DE)
(74) Vertreter: Patentanwälte Vollmann Hemmer Lindfeld Partnerschaft mbB

(56) Entgegenhaltungen:
- WO-A1-98/20761
- DE-U1-202015 106 725
- DE-U1-202018 105 613
- US-A- 4 366 604
- US-A- 4 937 923
- US-A- 5 193 955

## Beschreibung

Die Erfindung betrifft ein Ladungssicherungsnetz mit Notöffnungsvorrichtungen.

Zur Sicherung von stückiger Ladung, beispielsweise Päckchen und Paketen, werden oftmals flächige Sicherungsvorrichtungen eingesetzt. Diese können als Netze ausgeführt sein, welche aus miteinander verwobenen Gurten gebildet sind. An Seiten werden die Netze mit Beschlägen versehen, um sie im Fahrzeug zu verspannen. Dies kann über Klemmschlösser, Ratschen und Spannschlösser geschehen. Derartige Netze können sehr hohe Lasten aufnehmen, die als entsprechend hohe Zugkräfte über die verwobenen Gurte in die Fahrzeugstruktur eingeleitet werden.

DE 20 2015 106 725 U1 offenbart eine Vorrichtung zur Ladungssicherung in einem Laderaum mit zwei Trägern, die sich über die Höhe des Laderaums erstrecken, zwischen denen eine flächige Textilie angeordnet ist, mit Mitteln zum lösbaren Festlegen jedes Trägers an mindestens einem schienengeführten Beschlag an einer Seitenwand des Laderaums. Die WO 98/20761 beschreibt einen Bügel-Schnellverschluss für Sicherungsgurte. Die US 5,193,955 beschreibt ein Netz zum Verzurren von LKW-Plane mit Spannelementen. Die DE 20 2018 105613 U1 beschreibt eine Vorrichtung zur Sicherung von Ladung auf einer Ladefläche, mit zumindest einem Spanngurt, mit wenigstens einer Anschlagvorrichtung mit zumindest einer Gurtschlaufe und einem daran festgelegten Anschlagmittel, das lösbar an Bordwänden angeordnet ist.

Bekannte, flächige Ladungssicherungsnetze werden nach Beladung des Fahrzeugs direkt an der Ladung aufgespannt und festgezurrt. Nach Erreichen eines vorgesehenen Ziels ist allerdings ein Lösen der Ladungssicherungsnetze und ein Entladen des Fahrzeugs oft nicht leicht möglich, da die Ladung sehr häufig verrutscht und mit relativ großer Kraft gegen das Netz drückt. Die Spannung auf dem Netz ist nicht selten so hoch, dass es zur Entnahme der Ladung nicht mehr geöffnet werden kann und zerschnitten werden muss. Dies passiert mehrere tausend Mal im Jahr bei großen Paketzulieferern.

Aufgabe der vorliegenden Erfindung ist es, ein Ladungssicherungsnetz bereitzustellen, bei dem das Ladungssicherungsnetz bei hoher Zugspannung geöffnet werden kann, ohne das Ladungssicherungsnetz aufschneiden zu müssen.

Diese Aufgabe wird gemäß der Erfindung durch ein Ladungssicherungsnetz gemäß Anspruch 1 gelöst. Vorteilhafte Ausgestaltungen des Ladungssicherungsnetzes ergeben sich aus den Unteransprüchen, der nachfolgenden Beschreibung und den Zeichnungen, wobei die in den Unteransprüchen und der Beschreibung angegebenen Merkmale jeweils für sich aber auch in geeigneter Kombination anwendbar sind.

Erfindungsgemäß weist jede Notöffnungsvorrichtung des Ladungssicherungsnetzes ein Gurtschloss und eine Schlosszunge auf, die lösbar aneinander verriegelbar sind, wobei die Schlosszunge einen flächigen Einsteckabschnitt zum Einstecken in das Gurtschlosses entlang einer Einsteckrichtung aufweist. Erfindungsgemäß ist vorgesehen, dass das Gurtschloss einen Sperrkörper aufweist, der um eine quer zu der Einsteckrichtung verlaufende Drehachse drehbar gelagert ist und durch seine Drehposition eine lichte Höhe eines Aufnahmeschlitzes begrenzt, wobei der Einsteckabschnitt einen quer zu der Einsteckrichtung verlaufenden Vorsprung aufweist und wobei der Sperrkörper dazu ausgebildet ist, dass die lichte Höhe in einer ersten Drehposition das Durchschieben des Vorsprungs durch den Aufnahmeschlitz an dem Sperrkörper vorbei erlaubt und in einer zweiten Drehposition das Bewegen des Vorsprungs an dem Sperrkörper vorbei verhindert.

Mehrere Ladungssicherungsgurte des Ladungssicherungsnetzes, die mit einer solchen Notöffnungsvorrichtung ausgestattet sind, sind Teil eines weiter unten beschriebenen erfindungsgemäßen Ladungssicherungsnetzes. Dadurch wird ein selektives Öffnen des Ladungssicherungsnetzes unter hoher Zugspannung erlaubt, um in einer bestimmten Situation auf einen Teil einer gesicherten und insbesondere stückigen Ladung zuzugreifen. Dennoch wird durch den erfindungsgemäßen Aufbau der Notöffnungsvorrichtung das Einleiten sehr hoher Zugkräfte ermöglicht. Zum Eingehen eines verriegelten Zustands ist die Schlosszunge entlang der Einsteckrichtung in den Aufnahmeschlitz des Gurtschlosses zu stecken, um anschließend durch den Sperrkörper verriegelt zu werden.

In dem Gurtschloss ist ein Aufnahmeschlitz gebildet, durch den die Schlosszunge gesteckt wird. Die Schlosszunge weist einen Bereich auf, der Einsteckabschnitt genannt wird und bevorzugt bis auf den genannten Vorsprung flächig ausgeführt ist. Der Vorsprung könnte länglich ausgeformt sein und sich quer zu der Einsteckrichtung erstrecken. Die Dicke des Einsteckabschnitts ist demnach im Bereich des Vorsprungs lokal erhöht. Beim Durchstecken des Einsteckabschnitts durch den Aufnahmeschlitz kann der Vorsprung durch diesen hindurch geschoben werden, wenn der Sperrkörper eine ausreichende lichte Höhe einstellt. Anderenfalls gerät er mit dem Sperrkörper in Anschlag.

Der Sperrkörper ist dazu vorgesehen, eine zugfeste Verbindung zwischen der Schlosszunge und dem Gurtschloss zu erzwingen oder freizugeben. Dies wird dadurch erreicht, dass durch Drehen des Sperrkörpers in die erste Drehposition eine lichte Höhe zwischen dem Sperrkörper und einer Auflagefläche oder einer anderen Begrenzung des Gurtschlosses, auf der der Einsteckabschnitt aufliegt, zum Durchführen des Einsteckabschnitts mitsamt dem Vorsprung erhöht wird. Durch Drehen des Sperrkörpers in eine andere, zweite Drehposition wird die lichte Höhe jedoch so verringert, dass der Vorsprung nicht mehr entlang der Einsteckrichtung an dem Sperrkörper vorbei bewegbar ist. Befindet sich der Vorsprung dabei gänzlich im Innern des Gurtschlosses kann die Schlosszunge nicht mehr aus dem Gurtschloss herausgezogen werden. Die Notöffnungsvorrichtung ist verriegelt.

Diese Art der Verriegelung kann abhängig von der Ausformung des Sperrkörpers und dessen Anlenkung zur Aufnahme sehr hoher Zugkräfte genutzt werden. Der Sperrkörper könnte etwa mit einer Bedieneinrichtung verbunden sein, durch die der Sperrkörper von einem Benutzer verdrehbar ist. Die Bedieneinrichtung könnte in Form eines Hebels, einer Lasche oder einer Klappe ausgeführt sein.

Erfindungsgemäß weist der Sperrkörper eine zylindrische Form auf und ist an einer Längsseite abgeflacht. Der Sperrkörper könnte bevorzugt über seine gesamte Länge auf einer zylindrischen Form basieren, die eine ebenso bevorzugt durchgängige Abflachung besitzt. Die Abflachung kann sich dahingehend äußern, dass an einem ansonsten kreisförmigen Querschnitt des Sperrkörpers ein Kreissegment fehlt. Dies könnte Abtragen von Material durch Schleifen, Fräsen oder andere Prozesse parallel zur Drehachse erreicht werden.

Es ist vorteilhaft, wenn die Drehachse mit einer Mittelachse der zylindrischen Form zusammenfällt. Die Drehachse ist folglich derart angeordnet, dass durch Drehen des Sperrkörpers lediglich die Abflachung in um die Drehachse herumbewegt wird und die Raumerstreckung des Sperrkörpers an den verbleibenden Teilen ansonsten konstant ist. Ein lichter Abstand zwischen dem Sperrkörper und einer Auflagefläche oder einer anderen Begrenzung, auf der die Schlosszunge aufliegt, wird demnach durch Drehen des Sperrkörpers und damit die aktuelle Position der Abflachung bestimmt.

Besonders bevorzugt weist das Gurtschloss einen Öffnungshebel auf, der fest mit dem Sperrkörper verbunden ist, sodass sich der Sperrkörper bei Bewegung des Öffnungshebels dreht. Durch Betätigen des Öffnungshebels wird eine Verriegelung und Entriegelung der Notöffnungsvorrichtung erreicht. Bevorzugt ist er so ausgeführt, dass er einem Benutzer einfach zugewandt werden kann und sich einfach greifen lässt. Der Öffnungshebel könnte sich beispielsweise über die gesamte Breite der Notöffnungsvorrichtung erstrecken und eine Art Mulde oder Griffkante zum Greifen mit den Fingern aufweisen. Bevorzugt kann der Benutzer den Öffnungshebel in eine von dem Gurt abgewandte Richtung ziehen, um damit eine Entriegelung zu erreichen.

Das Gurtschloss könnte zudem einen Basiskörper umfassen, an dem der Öffnungshebel angeordnet ist, wobei der Öffnungshebel den Basiskörper entlang der Einsteckrichtung zumindest teilweise beidseitig umschließt. Durch das Umschließen kann die Notöffnungsvorrichtung vor mechanischer Einwirkung geschützt werden. Es ist besonders bevorzugt, wenn die Notöffnungsvorrichtung in einem geschlossenen, verriegelten Zustand möglichst flach ist und der Öffnungshebel dabei möglichst bündig auf dem Gurt aufliegt.

Das Gurtschloss könnte weiterhin eine Rastvorrichtung aufweisen, die dazu ausgebildet ist, den Öffnungshebel in der zweiten Drehposition lösbar zu halten. Der Öffnungshebel wird damit zur zusätzlichen Unterstützung des verriegelten Zustands in der zweiten Drehposition gehalten. Die Rastvorrichtung ist bevorzugt derart ausgebildet, dass durch kräftiges Betätigen des Öffnungshebels eine Verrastung aufgehoben wird.

In einer vorteilhaften Ausführungsform weist der Öffnungshebel eine Ausnehmung auf, die in der zweiten Drehposition mit einem federnd gelagerten Rastkörper fluchtet. Die Ausnehmung kann bevorzugt in einer Seitenfläche oder Seitenwange des Öffnungshebels angeordnet sein, wobei der federnd gelagerte Rastkörper bevorzugt parallel zu der Drehachse des Sperrkörpers bewegbar ist. Damit kann ein Drehmoment in den Öffnungshebel einwirken, das der Drehung des Öffnungshebels entgegenwirkt.

Es ist weiterhin vorteilhaft, wenn die Schlosszunge einen flachen Körper aufweist und der Vorsprung als ein Knick oder Falz an dem Körper ausgeführt ist. Dies ist leicht zu fertigen. Die Schlosszunge könnte als ein flaches Werkstück, beispielsweise als ein Metallblech, ausgeführt sein, welches durch Umformen mit dem Vorsprung ausgestattet wird. Die Größe des Vorsprungs und des Sperrkörpers werden aneinander angepasst.

Es ist vorteilhaft, wenn die erste Drehposition und die zweite Drehposition einen Winkel von mindestens 45° einschließen. Die Öffnungsbewegung, die ein Benutzer zum Öffnen der Notöffnungsvorrichtung durchführen muss, ist sehr prägnant. Eine versehentliche Entriegelung ist damit praktisch unmöglich. Besonders bevorzugt liegt der Winkel bei mehr als 45°, beispielsweise etwa 60°. Insbesondere bei der vorangehend dargestellten Ausführung als zylindrischer Körper mit einer Abflachung kann damit in der zweiten Drehposition sicher verhindert werden, dass der Vorsprung mit der Abflachung fluchtet.

Ein Abstand der Drehachse zu einer Auflagefläche in dem Gurtschloss, auf der die Schlosszunge aufliegt, übersteigt bevorzugt eine Höhe des Vorsprungs über der Auflagefläche. Dies ist besonders vorteilhaft, denn im verriegelten Zustand drängt der Vorsprung bei Zugbelastung der Schlosszunge derart an den Sperrkörper, dass dieser in Richtung der zweiten Drehposition gedrängt wird. Gleichzeitig führt die runde Form des Sperrkörpers zu einer Klemmkraft zwischen dem Sperrkörper und dem Vorsprung, die zu der vorangehend erwähnten Auflagefläche gerichtet ist und folglich die Schlosszunge zwischen den Sperrkörper und die Auflagefläche klemmt. Mit hoher Zugspannung unterstützt folglich die Schlosszunge den verriegelten Zustand.

Die Erfindung betrifft ein Ladungssicherungsnetz zur Transportsicherung einer Mehrzahl von Ladungseinheiten, wobei das Ladungssicherungsnetz eine Mehrzahl von Ladungssicherungsgurten aufweist, die eine Mehrzahl von Maschen bilden, wobei Ladungssicherungsgurte einer Reihe benachbarter Maschen jeweils mindestens eine zuvor beschriebene Notöffnungsvorrichtung aufweisen. Dabei sind die Notöffnungsvorrichtungen unter Zugspannung des jeweiligen Ladungssicherungsgurts manuell öffenbar und die Reihe benachbarter Maschen bilden bei jeweils geöffneter Notöffnungsvorrichtung eine Notöffnung im Ladungssicherungsnetz. Dadurch kann die Zugspannung auf die Ladungssicherungsgurte durch Öffnen der Notöffnungsvorrichtungen verringert und Ladungseinheiten durch die Notöffnung entnommen werden, ohne das Netz zerschneiden zu müssen.

Optional kann das Ladungssicherungsnetz eine den Ladungseinheiten zugewandte Ladungssicherungsseite und eine den Ladungseinheiten abgewandte Öffnungsseite aufweisen, wobei die Notöffnungsvorrichtungen von der Öffnungsseite her manuell öffenbar sind. Dadurch ist ein leichter Zugang und eine bequeme Handhabung der Notöffnungsvorrichtungen von der Öffnungsseite möglich.

Optional kann mindestens einer der Ladungssicherungsgurte der Reihe benachbarter Maschen mit Notöffnungsvorrichtung ein randseitiger Ladungssicherungsgurt des Ladungssicherungsnetzes sein. Dadurch kann das Ladungssicherungsnetz mit der Notöffnung bis zum Rand stark aufklaffen und besonders effizient die Zugspannung vom Ladungssicherungsnetz reduziert werden.

Optional können die Reihe benachbarter Maschen mit Ladungssicherungsgurt mit Notöffnungsvorrichtung bei geöffneten Notöffnungsvorrichtungen einen quer zur Zugspannung verlaufenden Schlitz als Notöffnung im Ladungssicherungsnetz bilden. Auch dies ist besonders günstig, um schnell die Zugspannung vom Ladungssicherungsnetz zu nehmen und Ladungseinheiten entnehmen zu können.

Erfindungsgemäß ist jede Notöffnungsvorrichtung des Ladungssicherungsnetzes jeweils eine zuvor beschriebene Notöffnungsvorrichtung.

Die Erfindung ist nachfolgend anhand eines in der Zeichnung dargestellten Ausführungsbeispiels näher erläutert. Es zeigen:
- Fig. 1a und 1b: zeigen die Notöffnungsvorrichtung in einer Draufsicht in einem geschlossenen Zustand (Fig. 1a) und einem geöffneten Zustand (Fig. 1b),
- Fig. 2a und 2b: zeigen die Notöffnungsvorrichtung aus Fig. 1a und 1b jeweils im Seitenschnitt,
- Fig. 3: zeigt die Notöffnungsvorrichtung in einer dreidimensionalen Darstellung,
- Fig. 4: zeigt ein Ladungssicherungsnetz,
- Fig. 5: zeigt eine Notöffnungsvorrichtung in einem Ladungssicherungsnetz.

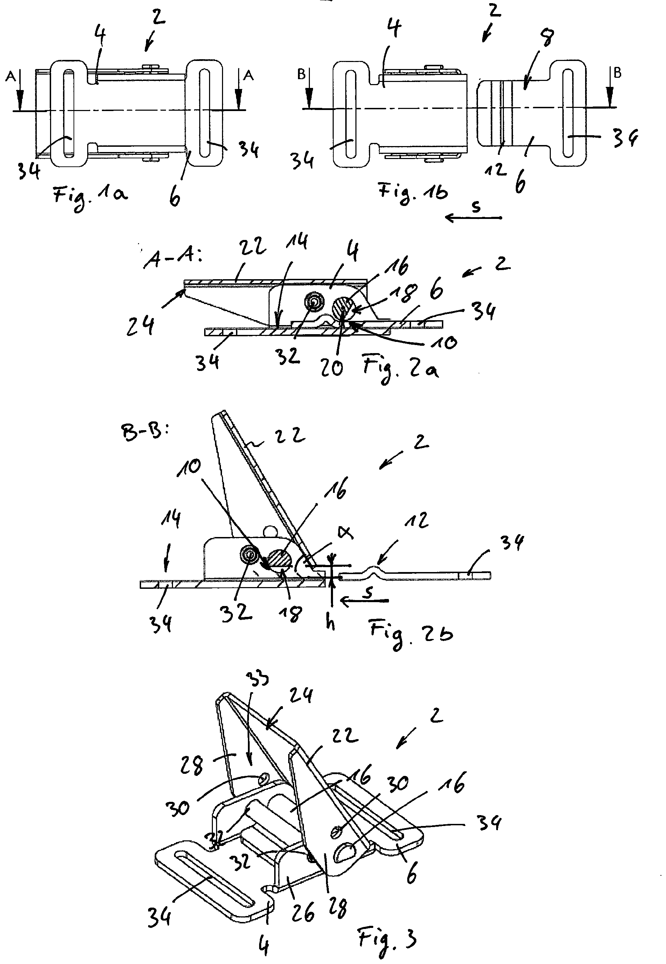

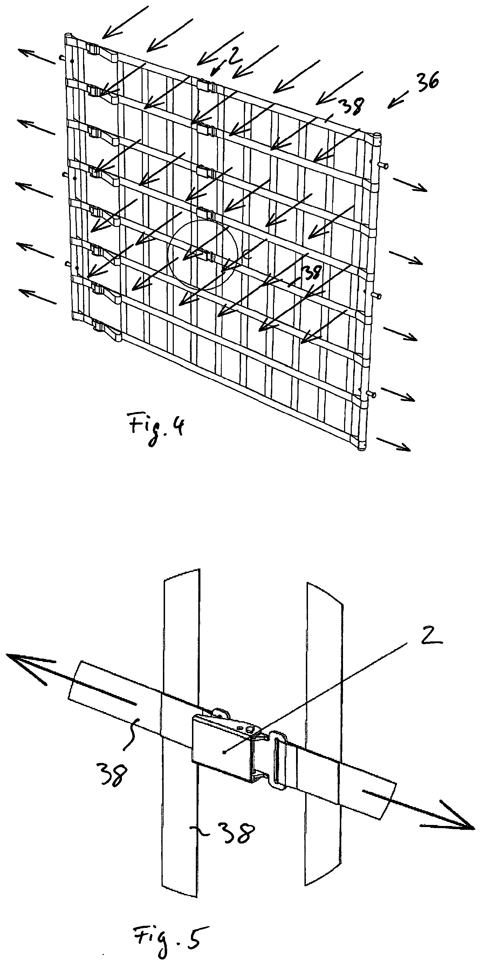

Fig. 1a und 1b zeigen eine Notöffnungsvorrichtung 2 für einen Ladungssicherungsgurt (siehe Fig. 4 und 5) in einer Draufsicht. In Fig. 1a ist die Notöffnungsvorrichtung 2 geschlossen, in Fig. 1b geöffnet. Die Notöffnungsvorrichtung 2 weist ein Gurtschloss 4 und eine Schlosszunge 6 auf, die lösbar aneinander verriegelbar sind. Die Schlosszunge 6 weist hierzu einen flächigen Einsteckabschnitt 8 auf, der zum Einstecken in einen Aufnahmeschlitz 10 des Gurtschlosses 4 ausgebildet ist. Dabei wird eine Einsteckrichtung s definiert, entlang der der Einsteckabschnitt 8 in den Aufnahmeschlitz 10 gesteckt wird. Der Einsteckabschnitt 8 ist flächig ausgebildet und weist einen quer zu der Einsteckrichtung s verlaufenden Vorsprung 12 auf. Dieser dient der Verriegelung der Schlosszunge 6 in dem Gurtschloss 4, wie anhand der Fig. 2a und 2b gezeigt wird.

Die Fig. 2a ist eine seitliche Schnittdarstellung der Konfiguration aus Fig. 1a, wobei dort die Schnittebene mit den Buchstaben "A" gekennzeichnet ist. Die Schlosszunge 6 liegt auf einer Auflagefläche 14 des Gurtschlosses 4 auf. Im Inneren des Gurtschlosses 4 ist ein Sperrkörper 16 ersichtlich, der eine zylindrische Form mit einer lateralen Abflachung 18 aufweist. Die Abflachung 18 weist im Querschnitt des Sperrkörpers 16 die Form eines Kreissegments auf. Der Sperrkörper 16 ist um eine Drehachse 20 drehbar gelagert, sodass durch Drehen des Sperrkörpers 16 die Position der Abflachung 18 um die Drehachse 20 herum geändert wird. Zum Einleiten der Rotation weist das Gurtschloss 4 einen Öffnungshebel 22 auf, der drehfest mit dem Sperrkörper 16 verbunden ist. Durch Greifen einer von dem Sperrkörper 16 abgewandten Griffkante 24 des Öffnungshebels 22 rotieren folglich der Öffnungshebel 22 und der Sperrkörper 16 um die Drehachse 20 herum.

Bei der Stellung des Öffnungshebels 22 wie in Fig. 2a gezeigt, ist die Ausnehmung 18 derart angeordnet, dass sie von der Griffkante 24 weg weist und der Aufnahmeschlitz 10 hierdurch eine geringe lichte Höhe zwischen dem Sperrkörper 16 und der Auflagefläche 14 bereitstellt. Die Schlosszunge 6 kann sich mit dem Vorsprung 12 demnach nicht an dem Sperrkörper 16 vorbei bewegen, da der Vorsprung 12 in einen Anschlag mit dem Sperrkörper 16 gerät. Das Einwirken einer Zugkraft auf die Schlosszunge 6 in eine von der Eingriffskante 24 abgewandte Richtung führt zudem dazu, dass der Vorsprung 12 mit dem Sperrkörper 16 verkeilt wird und gleichzeitig die Rotation des Sperrkörpers 16 in eine Stellung verhindert wird, in der die Abflachung 18 das Vorbeibewegen des Vorsprung 12 erlauben würde. Die Notöffnungsvorrichtung 2 ist folglich geschlossen und die Position des Sperrkörpers 16 entspricht der zweiten Drehposition.

In Fig. 2b ist eine Stellung des Öffnungshebels 22 gezeigt, der sich um den Winkel a von der Stellung in Fig. 2a unterscheidet. Gleiches gilt für die Abflachung 18 des Sperrkörpers 16. Dies entspricht der Konstellation in Fig. 1a, wobei dort die Schnittebene mit den Buchstaben "B" gekennzeichnet ist. Hier ist zwischen der Abflachung 18 und der Auflagefläche 14 eine lichte Höhe h des Aufnahmeschlitzes 10 gebildet, die das Durchschieben des Vorsprungs 12 auf der Auflagefläche 14 an dem Sperrkörper 16 vorbei erlaubt. Die Notöffnungsvorrichtung 2 ist in dieser Stellung des Sperrkörpers 16 folglich geöffnet. Die Position des Sperrkörpers 16 entspricht hier also der ersten Drehposition.

Fig. 3 zeigt die Notöffnungsvorrichtung 2 in einer dreidimensionalen Darstellung. Dort befindet sich der Öffnungshebel 22 in der geöffneten Stellung. Das Gurtschloss 4 weist einen Basiskörper 26 auf, an dem der Öffnungshebel 22 verschwenkbar angeordnet ist. Der Sperrkörper 16 erstreckt sich über die gesamte Breite des Basiskörpers 26 und ist mit Seitenwangen 28 des Öffnungshebels 24 verbunden. Hierdurch weist der Öffnungshebel 22 eine Form auf, die den Basiskörper 26 zumindest teilweise beidseitig umschließt.

Etwas in Richtung der Eingriffskante 24 von dem Sperrkörper 16 versetzt ist eine Ausnehmung 30 in beiden Seitenwangen 28 angeordnet, in die ein federnd gelagerter Rastkörper 32 einer Rastvorrichtung 33 eingreifen kann. Hierdurch kann der Öffnungshebel 22 in der geschlossenen Position zusätzlich gehalten werden. Die Verrastung ist jedoch derart zu dimensionieren, dass sie durch kräftiges Ziehen an der Griffkante 24 gelöst wird.

Zum Anbinden der Notöffnungsvorrichtung 2 an einen Ladungssicherungsgurt weisen sowohl das Gurtschloss 4 als auch die Schlosszunge 6 jeweils eine Auge 34 zum Durchführen eines Gurts bzw. einer Gurtschlaufe auf.

Fig. 4 zeigt ein Ladungssicherungsnetz 36, das mehrere Ladungssicherungsgurte 38 aufweist, die netzartig zueinander angeordnet sind. Sie können auch verwoben sein, um eine Netzstruktur auszubilden. Mehrere dieser Ladungssicherungsgurte 38 sind mit der vorangehend dargestellten Notöffnungsvorrichtung 2 ausgestattet. Eine flächige Last, die durch Kraftpfeile quer zu der Netzebene illustriert ist, führt durch die Ladungssicherung zu hohen Zugkräften, die durch die Ladungssicherungsgurte aufgenommen werden und hier durch die in der Netzebene liegenden Kraftpfeile illustriert werden. Die Notöffnungsvorrichtungen 2 halten diesen hohen Zugkräften in geschlossenem Zustand stand, sind aber zur Not unter dieser hohen Zugspannung manuell öffenbar, um im Ladungssicherungsnetz 36 eine Notöffnung zu bilden, durch welche Ladung entnommen werden kann und die Zugspannung reduziert wird.

Die Notöffnungsvorrichtung 2 an einem Ladungssicherungsgurt 38 ist in Fig. 5 in einem Detail etwas vergrößert dargestellt. Die hohen Zugkräfte, die bei der Ladungssicherung mit dem Ladungssicherungsnetz 36 auftreten, können von den erfindungsgemäßen Notöffnungsvorrichtungen 2 aufgrund der sich verkeilenden Komponenten im geschlossenen Zustand aufgenommen werden. Lässt sich das Ladungssicherungsnetz 36 wegen der hohen Zugspannung allerdings nicht mehr anderweitig öffnen, können die Notöffnungsvorrichtungen 2 selbst unter hoher Zugspannung relativ leicht geöffnet werden, um die Zugspannung zu reduzieren und Ladungseinheiten entnehmen zu können.

### Bezugszeichenliste

- 2: Notöffnungsvorrichtung
- 4: Gurtschloss
- 6: Schlosszunge
- 8: Einsteckabschnitt
- 10: Aufnahmeschlitz
- 12: Vorsprung
- 14: Auflagefläche
- 16: Sperrkörper
- 18: Abflachung
- 20: Drehachse
- 22: Öffnungshebel
- 24: Griff kante
- 26: Basiskörper
- 28: Seitenwange
- 30: Ausnehmung
- 32: Rastkörper
- 33: Rastvorrichtung
- 34: Auge
- 36: Ladungssicherungsnetz
- 38: Ladungssicherungsgurt

- a: Winkel
- h: lichte Höhe
- s: Einsteckrichtung

## Patentansprüche

1. Ladungssicherungsnetz (36) zur Transportsicherung einer Mehrzahl von Ladungseinheiten, wobei das Ladungssicherungsnetz (36) eine Mehrzahl von Ladungssicherungsgurten (38) aufweist, die eine Mehrzahl von Maschen bilden, wobei Ladungssicherungsgurte (38) einer Reihe benachbarter Maschen jeweils mindestens eine Notöffnungsvorrichtung (2) aufweisen, **dadurch gekennzeichnet, dass** die Notöffnungsvorrichtungen (2) unter Zugspannung des jeweiligen Ladungssicherungsgurts (38) manuell öffenbar sind und die Reihe benachbarter Maschen bei jeweils geöffneter Notöffnungsvorrichtung (2) eine Notöffnung im Ladungssicherungsnetz (36) bilden,
wobei jede Notöffnungsvorrichtung (2) ein Gurtschloss (4) und eine Schlosszunge (6) aufweist, die lösbar aneinander verriegelbar sind, wobei die Schlosszunge (6) einen flächigen Einsteckabschnitt (8) zum Einstecken in das Gurtschloss (4) entlang einer Einsteckrichtung (s) aufweist, wobei das Gurtschloss (4) einen Sperrkörper (16) aufweist, der um eine quer zu der Einsteckrichtung (s) verlaufende Drehachse (20) drehbar gelagert ist und durch seine Drehposition eine lichte Höhe (h) eines Aufnahmeschlitzes (10) begrenzt, wobei der Einsteckabschnitt (8) einen quer zu der Einsteckrichtung (s) verlaufenden Vorsprung (12) aufweist und wobei der Sperrkörper (16) dazu ausgebildet ist, dass die lichte Höhe (h) in einer ersten Drehposition das Durchschieben des Vorsprungs (12) durch den Aufnahmeschlitz (10) an dem Sperrkörper (16) vorbei erlaubt und in einer zweiten Drehposition das Bewegen des Vorsprungs (12) an dem Sperrkörper (16) vorbei verhindert, wobei der Sperrkörper (16) eine zylindrische Form aufweist und an einer Längsseite abgeflacht ist.

2. Ladungssicherungsnetz (36) nach Anspruch 1, **dadurch gekennzeichnet, dass** die Drehachse (20) mit einer Mittelachse der zylindrischen Form zusammenfällt.

3. Ladungssicherungsnetz (36) nach einem der vorhergehenden Ansprüche, **dadurch gekennzeichnet, dass** das Gurtschloss (4) einen Öffnungshebel (22) aufweist, der fest mit dem Sperrkörper (16) verbunden ist, sodass sich der Sperrkörper (16) bei Bewegung des Öffnungshebels (22) dreht.

4. Ladungssicherungsnetz (36) nach Anspruch 3, **dadurch gekennzeichnet, dass** das Gurtschloss (4) einen Basiskörper (26) umfasst, an dem der Öffnungshebel (22) angeordnet ist, wobei der Öffnungshebel (22) den Basiskörper (26) entlang der Einsteckrichtung (s) zumindest teilweise beidseitig umschließt.

5. Ladungssicherungsnetz (36) nach Anspruch 3 oder 4, **dadurch gekennzeichnet, dass** das Gurtschloss (4) eine Rastvorrichtung (33) aufweist, die dazu ausgebildet ist, den Öffnungshebel (22) in der zweiten Drehposition lösbar zu halten.

6. Ladungssicherungsnetz (36) nach Anspruch 5, **dadurch gekennzeichnet, dass** der Öffnungshebel (22) eine Ausnehmung (30) aufweist, die in der zweiten Drehposition mit einem federnd gelagerten Rastkörper (32) fluchtet.

7. Ladungssicherungsnetz (36) nach einem der vorhergehenden Ansprüche, **dadurch gekennzeichnet, dass** die Schlosszunge (6) einen flachen Körper aufweist und der Vorsprung (12) als ein Knick oder Falz an dem Körper ausgeführt ist.

8. Ladungssicherungsnetz (36) nach einem der vorhergehenden Ansprüche, **dadurch gekennzeichnet, dass** die erste Drehposition und die zweite Drehposition einen Winkel von mindestens 45° einschließen.

9. Ladungssicherungsnetz (36) nach einem der vorhergehenden Ansprüche, **dadurch gekennzeichnet, dass** ein Abstand der Drehachse (20) zu einer Auflagefläche (14) in dem Gurtschloss (4), auf der die Schlosszunge (6) aufliegt, eine Höhe des Vorsprungs (12) über der Auflagefläche (14) übersteigt.

10. Ladungssicherungsnetz (36) nach einem der vorhergehenden Ansprüche, wobei das Ladungssicherungsnetz (36) eine den Ladungseinheiten zugewandte Ladungssicherungsseite und eine den Ladungseinheiten abgewandte Öffnungsseite aufweist, wobei die Notöffnungsvorrichtungen (2) von der Öffnungsseite her manuell öffenbar sind.

11. Ladungssicherungsnetz (36) nach einem der vorhergehenden Ansprüche, wobei mindestens einer der Ladungssicherungsgurte (38) der Reihe benachbarter Maschen mit Notöffnungsvorrichtung (2) ein randseitiger Ladungssicherungsgurt (38) des Ladungssicherungsnetzes (36) ist.

12. Ladungssicherungsnetz (36) nach einem der vorhergehenden Ansprüche, wobei die Reihe benachbarter Maschen mit Ladungssicherungsgurt (38) mit Notöffnungsvorrichtung (2) bei jeweils geöffneter Notöffnungsvorrichtung (2) einen quer zur Zugspannung verlaufenden Schlitz als Notöffnung im Ladungssicherungsnetz (36) bilden.

## Claims

1. A load securing net (36) for secure transport of a plurality of load units, wherein the load securing net (36) comprises a plurality of load securing belts (38) forming a plurality of meshes, wherein the load securing belts (38) of a row of adjacent meshes each have at least one emergency opening device (2), **characterized in that** the emergency opening devices (2) can be opened manually under tensile stress of the respective load securing belt (38) and the row of adjacent meshes form an emergency opening in the load securing net (36) in each case an emergency opening device (2) is open,
wherein each emergency opening device (2) comprises a belt buckle (4) and a buckle tongue (6) which can be releasably locked to one another, wherein the buckle tongue (6) comprises a flat insertion portion (8) for insertion into the belt buckle (4) along an insertion direction (s), wherein the belt buckle (4) has a locking body (16) which is mounted rotatably about an axis of rotation (20) extending transverse to the insertion direction (s) and, by means of its rotational position, delimits a clear height (h) of a receiving slot (10), wherein the insertion portion (8) has a projection (12) extending transverse to the insertion direction (s), and wherein the locking body (16) is designed such that the clearance height (h), in a first rotational position, allows the projection (12) to be pushed through the receiving slot (10) and past the locking body (16) and in a second rotational position prevents the projection (12) from moving past the locking body (16), wherein the locking body (16) has a cylindrical shape and is flattened on a longitudinal side.

2. The load securing net (36) according to claim 1, **characterized in that** the axis of rotation (20) coincides with a central axis of the cylindrical shape.

3. The load securing net (36) according to any one of the preceding claims, **characterized in that** the belt buckle (4) has an opening lever (22) which is fixedly connected to the locking body (16), so that the locking body (16) rotates upon movement of the opening lever (22).

4. The load securing net (36) according to claim 3, **characterized in that** the belt buckle (4) comprises a base body (26) on which the opening lever (22) is arranged, wherein the opening lever (22) at least partially encloses the base body (26) on both sides along the insertion direction (s).

5. The load-securing net (36) according to claim 3 or 4, **characterized in that** the belt buckle (4) has a latching device (33) which is designed to releasably hold the opening lever (22) in the second rotational position.

6. The load securing net (36) according to claim 5, **characterized in that** the opening lever (22) has a recess (30) which, in the second rotational position, is aligned with a resiliently mounted latching body (32).

7. The load securing net (36) according to any one of the preceding claims, **characterized in that** the buckle tongue (6) has a flat body and the projection (12) is designed as a bend or fold on the body.

8. A load securing net (36) according to any one of the preceding claims, **characterized in that** the first rotational position and the second rotational position enclose an angle of at least 45°.

9. The load securing net (36) according to any one of the preceding claims, **characterized in that** a distance of the axis of rotation (20) from a bearing surface (14) in the belt buckle (4), on which the buckle tongue (6) rests, exceeds a height of the projection (12) above the bearing surface (14).

10. The load securing net (36) according to any one of the preceding claims, wherein the load securing net (36) has a load securing side facing the load units and an opening side facing away from the load units, wherein the emergency opening devices (2) can be opened manually from the opening side.

11. The load securing net (36) according to any one of the preceding claims, wherein at least one of the load securing belts (38) of the row of adjacent meshes with emergency opening device (2) is an edge-side load securing belt (38) of the load securing net (36).

12. The load securing net (36) according to any one of the preceding claims, wherein the row of adjacent meshes with load securing belt (38) with emergency opening device (2) form a slot running transverse to the tensile stress as an emergency opening in the load securing net (36) in each case an emergency opening device (2) is open.

## Revendications

1. Filet de sécurisation de charge (36) pour la sécurisation d'une pluralité d'unités de charge, le filet de sécurisation de charge (36) comprenant une pluralité de courroies de sécurisation de charge (38) qui forment une pluralité de mailles, des courroies de sécurisation de charge (38) d'une rangée de mailles avoisinantes comprenant respectivement au moins un dispositif d'ouverture d'urgence (2), **caractérisé en ce que** les dispositifs d'ouverture d'urgence (2) peuvent être ouverts manuellement sous contrainte de traction de la courroie de sécurisation de charge (38) respective et que, lorsque le dispositif d'ouverture d'urgence (2) respectif est ouvert, la rangée de mailles avoisinantes forment une ouverture d'urgence dans le filet de sécurisation de charge (36), chaque dispositif d'ouverture d'urgence (2) comprenant une boucle de courroie (4) et un oeillet de bouclage (6) qui peuvent être verrouillés l'un avec l'autre de façon détachable, l'œillet de bouclage (6) comprenant une partie à enficher (8) surfacique destinée à être enfichée dans la boucle de courroie (4) le long d'une direction d'enfichage (s), la boucle de courroie (4) comprenant un corps de blocage (16) qui est monté de façon à pouvoir être tourné autour d'un axe de rotation (20) s'étendant transversalement à la direction d'enfichage (s) et limitant par sa position de rotation une hauteur libre (h) d'une fente de réception (10), la partie à enficher (8) comprenant une avancée (12) s'étendant transversalement à la direction d'enfichage (s) et le corps de blocage (16) étant formé de façon que, dans une première position de rotation, la hauteur libre (h) permette le passage de l'avancée (12) par la fente de réception (10) en passant devant le corps de blocage (16), et que, dans une deuxième position de rotation, elle empêche le passage de l'avancée (12) devant le corps de blocage (16), le corps de blocage (16) ayant une forme cylindrique et étant aplati sur un côté longitudinal.

2. Filet de sécurisation de charge (36) selon la revendication 1, **caractérisé en ce que** l'axe de rotation (20) coïncide avec un axe central de la forme cylindrique.

3. Filet de sécurisation de charge (36) selon l'une des revendications précédentes, **caractérisé en ce que** la boucle de courroie (4) comprend un levier d'ouverture (22) qui est fermement relié au corps de blocage (16) si bien que le corps de blocage (16) tourne lors d'un déplacement du levier d'ouverture (22).

4. Filet de sécurisation de charge (36) selon la revendication 3, **caractérisé en ce que** la boucle de courroie (4) comprend un corps de base (26) auquel est fixé le levier d'ouverture (22), le levier d'ouverture (22) englobant le corps de base (26) le long de la direction d'enfichage (s) des deux côtés, du moins en partie.

5. Filet de sécurisation de charge (36) selon la revendication 3 ou 4, **caractérisé en ce que** la boucle de courroie (4) comprend un dispositif d'arrêt (33) qui est formé pour tenir le levier d'ouverture (22) de façon déblocable dans la deuxième position de rotation.

6. Filet de sécurisation de charge (36) selon la revendication 5, **caractérisé en ce que** le levier d'ouverture (22) comprend un évidement (30) qui est aligné, dans la deuxième position de rotation, avec un corps d'arrêt (32) monté de façon résiliente.

7. Filet de sécurisation de charge (36) selon l'une des revendications précédentes, **caractérisé en ce que** l'œillet de bouclage (6) comprend un corps plat et que l'avancée (12) est réalisée comme un coude ou un pli sur le corps.

8. Filet de sécurisation de charge (36) selon l'une des revendications précédentes, **caractérisé en ce que** la première position de rotation et la deuxième position de rotation forment un angle d'au moins 45°.

9. Filet de sécurisation de charge (36) selon l'une des revendications précédentes, **caractérisé en ce que**, dans la boucle de courroie (4), une distance entre l'axe de rotation (20) et une surface portante (14) sur laquelle repose l'œillet de bouclage (6), dépasse une hauteur de l'avancée (12) au-dessus de la surface portante (14).

10. Filet de sécurisation de charge (36) selon l'une des revendications précédentes, le filet de sécurisation de charge (36) comprenant un côté de sécurisation de charge orienté vers les unités de charge et un côté d'ouverture opposé aux unités de charge, les dispositifs d'ouverture d'urgence (2) pouvant être ouverts manuellement à partir du côté d'ouverture.

11. Filet de sécurisation de charge (36) selon l'une des revendications précédentes, au moins une des courroies de sécurisation de charge (38) de la rangée de mailles avec un dispositif d'ouverture d'urgence (2) avoisinantes étant une courroie de sécurisation de charge (38) de bord du filet de sécurisation de charge (36).

12. Filet de sécurisation de charge (36) selon l'une des revendications précédentes, la rangée de mailles avoisinantes avec une courroie de sécurisation de charge (38) avec un dispositif d'ouverture d'urgence (2), formant, lorsque le dispositif d'ouverture d'urgence (2) respectif est ouvert, une fente s'étendant transversalement par rapport à la tension de traction comme ouverture d'urgence dans le filet de sécurisation de charge (36).
